# FASCICULE DE BREVET EUROPEEN

(11) **EP 3 315 688 B1**
(45) Date de publication et mention de la délivrance du brevet: **11.08.2021**
(21) Numéro de dépôt: 17197924.8
(22) Date de dépôt: 24.10.2017
(51) Int. Cl.: E04F 15/02, C09J 7/00

(54) **REVETEMENT DE SOL REPOSITIONNABLE**
REPOSITIONIERBARER BODENBELAG
REPOSITIONABLE FLOOR COVERING

(30) Priorité: 26.10.2016 FR 1660401
(43) Date de publication de la demande: 02.05.2018
(73) Titulaire: GERFLOR, 69100 Villeurbanne (FR)
(72) Inventeur: CHALUMEY, Caroline, 84500 BOLLENE (FR); CAYROL, Frédéric, 26290 DONZERE (FR)
(74) Mandataire: Cabinet Laurent & Charras

(56) Documents cités:
- FR-A1- 2 294 194
- US-A1- 2004 192 831
- US-A1- 2011 014 465

## Description

### DOMAINE DE L'INVENTION

La présente invention concerne un revêtement de sol repositionnable dont la face destinée à être en contact avec le sol est recouverte d'un adhésif sensible à la pression.

Le domaine d'utilisation de la présente invention concerne notamment la rénovation de sols, par exemples les sols déjà recouverts d'un support en plastique.

### ETAT ANTERIEUR DE LA TECHNIQUE

Les revêtements de sol repositionnables sont généralement autocollants. Ils présentent de nombreux avantages parmi lesquels la facilité de la pose. En effet, leur face inférieure destinée à être en contact avec le sol est recouverte d'un adhésif éliminant les opérations fastidieuses d'étalement de la colle sur le sol.

Le document EP 2 447 054 décrit un revêtement de sol autocollant comprenant successivement une couche principale, une première couche adhésive, une couche fibreuse ou poreuse et une deuxième couche adhésive.

La deuxième couche adhésive confère au revêtement les propriétés autocollantes. Elle est réalisée par transfert à chaud ou par pulvérisation d'une colle « hot melt PSA » (adhésif thermofusible sensible à la pression).

De manière générale, un hot melt (100% extrait sec) est solide à température ambiante ; il doit être chauffé avant application ; il ne présente pas de tack à température ambiante ; et il permet d'obtenir un collage permanent. Cependant, parmi les colles hot melt, il existe des hot melt PSA (adhésif sensible à la pression) parmi lesquels les hot melt PSA réticulables sous rayonnement ultraviolet. C'est ce type de hot melt qui est utilisé dans le document EP 2 447 054. Les hot melt PSA sont généralement à base de polyéthylène, polypropylène, ou d'éthylène-acétate de vinyle (EVA).

Le revêtement de sol décrit dans le document EP 2 447 054 est obtenu selon les étapes suivantes :
- application d'un premier adhésif (colle de type époxy, phénolique, vinylique, ou polyuréthane) sur la face envers d'un revêtement de sol,
- application d'un substrat fibreux ou poreux sur la face envers du revêtement de sol recouverte du premier adhésif, le premier adhésif pénétrant en partie dans le substrat poreux ou fibreux,
- application d'un deuxième adhésif hot melt PSA (adhésif thermofusible sensible à la pression) sur le substrat poreux ou fibreux.

Quand bien même ce type de revêtement autocollant peut s'avérer satisfaisant à court terme, sa tenue dans le temps peut s'avérer problématique. En effet, ses propriétés collantes diminuent avec le temps, en particulier l'adhésion au sol et la résistance au cisaillement (glissement dans un mouvement parallèle au sol).

D'autre part, lorsque ce type de revêtement de sol est enlevé après quelques mois d'utilisation, on peut observer un transfert de colle sur le sol. Le transfert de colle peut non seulement nécessiter le nettoyage du sol mais il peut aussi endommager le sol, ce qui rend ce type de revêtement inapproprié dans le cas où celui-ci est changé régulièrement. Ainsi, l'utilisateur devra nettoyer ou réparer le sol avant d'envisager la pose d'un nouveau revêtement de sol, rendant également le local inutilisable le temps de ces opérations longues et fastidieuses.

Finalement, lorsque ce type de revêtement est utilisé pour recouvrir un sol à base de PVC (poly chlorure de vinyle) plastifié, on observe généralement la dégradation de l'adhésif hot melt sensible à la pression. Cette dégradation est générée par le transfert des plastifiants du sol à base de PVC plastifié vers l'adhésif hot melt sensible à la pression. Ce transfert altère progressivement la cohésion de l'adhésif hot melt, lui donnant un aspect mielleux caractéristique de sa dégradation.

Le document US 2011/0014465 ne concerne pas les revêtements de sol. Ce document décrit une feuille de publicité adhésive destinée à être appliquée sur une fenêtre ou sur le sol. Ce type de feuille présente une épaisseur comprise entre 50 et 200 µm.

Le document FR 2 294 194 décrit un revêtement de sol autocollant mais ne pouvant pas être repositionné.

Le document US 2004/019283 ne concerne pas le domaine des revêtements de sol. Ce document décrit un adhésif de type PSA.

La présente invention permet de résoudre ces problèmes grâce à l'utilisation d'un adhésif sensible à la pression qui n'est pas transféré vers le sol et qui, le cas échéant, permet de former une couche barrière aux plastifiants du sol en plastique sur lequel il est disposé.

Le comportement de cet adhésif sensible à la pression procure un réel avantage par rapport aux adhésifs hot melt de l'art antérieur, notamment un meilleur comportement sur tous types de supports au fil du temps.

### EXPOSE DE L'INVENTION

La présente invention concerne un revêtement de sol repositionnable se présentant sous la forme de dalle(s), de lame(s) ou de rouleau(x). Il est autoadhésif et présente donc l'avantage de pouvoir être utilisé en pose libre, sans ajout supplémentaire de colle entre le revêtement de sol et le sol. Etant repositionnable au moment de la pose ou dans le temps, ce revêtement de sol peut être posé ou déposé sur un support comme un sol, et ce sans dégrader celui-ci.

Ce revêtement de sol étant repositionnable, il peut être posé, puis décollé au moment de la pose de manière à ajuster son positionnement. Il peut également être décollé ultérieurement pour changer de revêtement de sol.

Plus précisément, la présente invention concerne un revêtement de sol repositionnable selon la revendication 1.

La colle PSA en phase aqueuse correspond à une composition liquide comprenant au moins un PSA et de l'eau. Elle est avantageusement constituée de PSA et d'eau.

Le PSA est un adhésif sensible à la pression. Il correspond à la colle séchée.

Ce revêtement de sol étant principalement destiné à rénover un sol, le sol sur lequel il est posé peut notamment être en béton, en carrelage, en plastique (par exemple un ancien revêtement en PVC), en acier inoxydable ou en bois. Il peut même s'agir d'un sol amianté.

La présence du PSA permet de poser et de repositionner le revêtement de sol, le PSA présentant une meilleure accroche sur la face envers du revêtement de sol que sur le sol. Contrairement aux revêtements de sol de l'art antérieur dont l'adhésif sensible à la pression est un hot melt (adhésif thermofusible), les propriétés du PSA issu de la colle PSA en phase aqueuse permettent d'aisément retirer le revêtement de sol selon l'invention, même après une longue période d'utilisation et ce sans laisser de résidus de PSA sur le sol.

Un adhésif sensible à la pression correspond à un adhésif adhérant à un support par application d'une pression. Il ne nécessite pas de solvant, ni de chaleur pour activer son pouvoir adhérant.

Le PSA issu de la colle PSA en phase aqueuse confère au revêtement de sol une valeur de pégosité (tack) avantageusement comprise entre 1 et 25 N/cm². La valeur de pégosité est avantageusement mesurée sur un support spécifique, par exemple un support en métal, en bois, en fibre-ciment, ou en PVC.

La valeur de pégosité correspond aux propriétés d'adhérence immédiate du PSA sous légère pression.

De manière générale, le revêtement de sol présente une différence de valeur de pégosité inférieure à 30% après un vieillissement de deux semaines à 50°C ou après un vieillissement d'une semaine à 70°C, et ce à 70% d'humidité relative lorsque le revêtement de sol est positionné sur un support en PVC plastifié (poly chlorure de vinyle).

Les conditions de mesure de la valeur de pégosité sont précisées ci-après (exemples de réalisation) et sont applicables à tous les modes de réalisation de l'invention.

En outre, le PSA issu de la colle PSA en phase aqueuse confère également au revêtement de sol une valeur de résistance au cisaillement avantageusement comprise entre 1 et 40 N/cm², plus avantageusement entre 5 et 20 N/cm². La valeur de résistance au cisaillement est avantageusement mesurée sur un support spécifique, par exemple un support en métal, en bois, en fibre-ciment, ou en PVC.

De manière générale, le revêtement de sol présente une différence de valeur de résistance au cisaillement inférieure à 40%, avantageusement inférieure à 30%, après un vieillissement de deux semaines à 50°C, et ce à 70% d'humidité relative lorsque le revêtement de sol est positionné sur un support en PVC plastifié. Dans les mêmes conditions, la différence de valeur de cisaillement est inférieure à 60% après un vieillissement d'une semaine à 70°C.

Les conditions de mesure de la valeur de cisaillement sont précisées ci-après (exemples de réalisation) et sont applicables à tous les modes de réalisation de l'invention.

Au regard du maintien de ses propriétés autocollantes dans le temps, le revêtement de sol selon l'invention peut également être recyclé pour une nouvelle utilisation.

Comme déjà indiqué, une colle PSA en phase aqueuse est mise en œuvre pour déposer le PSA. Cette colle PSA peut notamment être déposée sur la face envers du revêtement de sol. La colle PSA est ainsi appliquée puis séchée de manière à évaporer la phase aqueuse et former une couche de PSA.

Le dépôt de la colle PSA est donc avantageusement réalisé en l'absence de solvant organique. Le PSA ne nécessite pas d'exposition à un rayonnement ultraviolet, ni de chaleur (hors séchage) pour avoir des propriétés d'adhésif sensible à la pression.

La colle PSA en phase aqueuse comprend avantageusement entre 50 et 70 % en poids d'extrait sec, plus avantageusement environ 60% en poids d'extrait sec. L'extrait sec correspond à la quantité de PSA une fois la phase aqueuse séchée.

La colle PSA en phase aqueuse correspond à une dispersion ou une suspension de l'adhésif PSA dans l'eau. Après évaporation de la phase aqueuse, l'adhésif PSA présente un pouvoir adhésif permettant le repositionnement ou le changement du revêtement de sol.

De manière avantageuse, le revêtement de sol comprend une quantité de PSA (PSA déposé) comprise entre 15 et 100 g/m², avantageusement entre 15 et 50 g/m². Cette quantité est bien entendu exprimée par rapport à la surface de la face envers du revêtement sol. D'autre part, elle est exprimée après séchage de la colle PSA en phase aqueuse.

Une quantité de PSA supérieure à 100 g/m² ne présente pas d'avantage. Au contraire, elle augmenterait le coût du revêtement de sol et pourrait, dans certains cas, entrainer une baisse de la tenue du revêtement au sol. En d'autres termes, un palier est atteint particulièrement en termes de cisaillement.

D'autre part, une quantité de PSA inférieure à 15 g/m² pourrait s'avérer insuffisante pour assurer la tenue du revêtement au sol.

Le séchage de la phase aqueuse de la colle PSA peut être réalisé dans un four, par exemple à une température comprise entre 20 et 120°C, avantageusement entre 60 et 100°C.

De manière générale, le PSA peut être à base acrylique et/ou acrylate. Il s'agit avantageusement d'un copolymère acrylate/acrylonitrile ou d'un terpolymère acrylate/vinyl acétate/éthylène.

Comme déjà indiqué, le revêtement de sol selon l'invention comprend une face envers et une face endroit. Il peut s'agir d'un monocouche constitué d'une couche principale. Il peut être constitué d'une multitude de couches, par exemple une couche d'usure, optionnellement une couche de décor, une couche principale et une couche support (backing). Dans ce cas, les faces endroit et envers correspondent respectivement à la couche d'usure et à la couche support.

De manière générale, le revêtement de sol (monocouche ou multitude de couches) présente une épaisseur avantageusement comprise entre 2 et 10 mm, plus avantageusement entre 2 et 7 mm.

Lorsqu'elle est présente, la couche d'usure présente une épaisseur avantageusement comprise entre 0,1 et 2 mm, plus avantageusement entre 0,2 et 1 mm.

Lorsqu'elle est présente, la couche de décor présente une épaisseur avantageusement comprise entre 30 µm et 250 µm, plus avantageusement entre 50 µm et 150 µm.

Lorsqu'elle est présente, la couche principale présente une épaisseur avantageusement comprise entre 0,5 et 3 mm, plus avantageusement entre 1 et 2 mm.

Lorsqu'elle est présente, la couche support (backing) présente une épaisseur avantageusement comprise entre 0,5 et 3 mm, plus avantageusement entre 1 et 2 mm.

La face envers peut correspondre simultanément à la couche principale et à la couche support du revêtement de sol. Dans ce cas, la couche support est optionnelle.

La face envers est avantageusement constituée d'une couche plastique. Selon un mode de réalisation avantageux, elle est à base de PVC. Elle peut notamment être constituée d'une couche non fibreuse.

La couche constituant la face envers peut notamment être moussée, compacte, calandrée. Elle peut être en PVC, intégralement ou partiellement en textile.

De manière générale, le revêtement de sol selon l'invention présente une masse surfacique avantageusement comprise entre 500 et 5000 g/m².

Comme déjà indiqué, il peut s'agir de dalles, de lames ou de rouleaux. Il peut ainsi présenter, sur les bords, des rainures facilitant l'assemblage entre dalles ou lames. Il présente des dimensions conventionnelles en termes de longueur et de largeur, de l'ordre de dizaines de centimètres pour les dalles et les lames et de l'ordre de plusieurs mètres pour les rouleaux. Son épaisseur est généralement de l'ordre de quelques millimètres.

Selon un mode de réalisation avantageux, le PSA peut être recouvert d'un film antiadhésif. La présence de ce film antiadhésif facilite le transport du revêtement de sol, le PSA étant poissant (ou « tackant ») à l'issue du séchage. Ce film antiadhésif peut notamment être un film de type kraft enduit de silicone sur une ou deux faces.

Comme déjà indiqué, le PSA est déposé au moyen d'une colle PSA en phase aqueuse. La colle PSA peut être déposée sur la face envers du revêtement de sol, puis séchée, le PSA étant ensuite recouvert d'un film antiadhésif par lamination. La colle PSA en phase aqueuse peut également être déposée sur un film antiadhésif, puis séchée, le PSA étant ensuite laminé sur la face envers du revêtement de sol. La lamination permet, par pression mécanique, d'assurer l'adhésion entre le PSA et la couche envers du revêtement de sol. La lamination peut notamment être réalisée à chaud. L'homme du métier saura adapter la température de lamination en fonction de la nature du revêtement de sol.

Le dépôt de la colle PSA en phase aqueuse est avantageusement réalisé par enduction ou par pulvérisation. Il est avantageusement réalisé à température ambiante.

Comme déjà indiqué, le PSA peut être également transféré (procédé de lamination). Dans ce cas, l'adhésif PSA peut être déposé au rouleau ou à l'aide d'un contre cylindre.

De manière avantageuse, le PSA forme une couche barrière au(x) plastifiant(s) de la couche envers qui est avantageusement à base de PVC, plus avantageusement en PVC.

Le revêtement de sol selon l'invention procure les avantages suivants :
- Pas de transfert du PSA sur le sol sur lequel le revêtement est positionné. En effet, le PSA présente une meilleure adhérence sur la face envers que sur le sol et ce même lorsque le sol est à base de PVC. Le revêtement de sol peut ainsi être aisément retiré sans laisser de traces de colle.
- Le PSA reste poissant (ou « tackant ») au cours du temps. Il ne se dégrade pas, permettant le repositionnement au moment de la pose ou la rénovation.
- Tenue au cisaillement et maintien du tack au fil du temps, le revêtement pouvant être posé, enlevé, repositionné sans altérer le sol sur lequel il repose. Le PSA issu d'une colle PSA en phase aqueuse permet d'obtenir une rupture adhésive (le PSA reste sur la face envers du revêtement de sol quand celui-ci est arraché du sol) et non une rupture cohésive (le PSA se sépare en deux parties, une sur le revêtement de sol, l'autre sur le sol).
- Le PSA forme une couche barrière permettant de limiter voire de stopper toute migration de composés chimiques du sol ou du support sur lequel est positionné le revêtement de sol vers le PSA ou vers la face envers du revêtement de sol. Ces composés chimiques incluent notamment les plastifiants lorsque le revêtement de sol est positionné sur un sol (ou support) en plastique, notamment en PVC plastifié. Comme déjà indiqué, ce type de transfert vers le PSA transforme généralement l'adhésif en une couche ayant un aspect mielleux.

A titre d'exemple, le PSA forme une couche barrière aux plastifiants choisis parmi le diisononyl phtalate (DINP), le diisodecyl phtalate (DIDP), le 2-éthylhexyl diphényle phosphate (DPO), le téréphtalate dioctylique (DOTP), le 1,2-cyclohexane dicarboxylique acide diisononyl ester (DINCH), les plastifiants de la famille des benzoates, les plastifiants de la famille des adipates, les plastifiants de la famille des citrates, les plastifiants commercialisés sous la marque PEVALEN® par la société Perstorp, ou encore l'huile de soja epoxydée (HSE).

Par conséquent, le revêtement de sol selon l'invention est particulièrement adapté dans la rénovation des sols, notamment pour le recouvrement d'un revêtement déjà existant. Cela peut s'avérer particulièrement utile lorsque le sol contient de l'amiante. Il permet de diminuer le temps d'encombrement des chantiers grâce à la possibilité de recouvrir rapidement des sols à rénover.

Ainsi, la présente invention concerne également un procédé de rénovation d'un sol recouvert d'un support en plastique, selon lequel on positionne le revêtement de sol sur un support en plastique à rénover, et on forme une couche barrière aux plastifiants du support en plastique à rénover, avec le PSA recouvrant la face envers du revêtement de sol.

En d'autres termes, l'invention concerne également l'utilisation de ce revêtement de sol pour former une couche barrière aux plastifiants d'un support en plastique à rénover.

L'invention et les avantages qui en découlent ressortiront mieux de la figure et des exemples suivants donnés afin d'illustrer l'invention et non de manière limitative.

### DESCRIPTION DES FIGURES

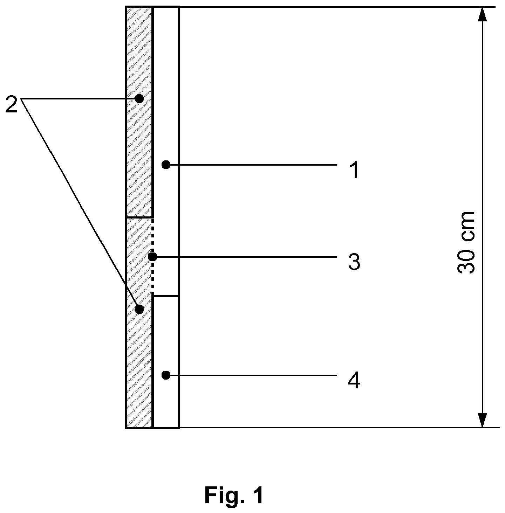

La figure 1 illustre une vue en coupe d'une éprouvette utilisée pour un test de cisaillement.

### EXEMPLES DE REALISATION DE L'INVENTION

Plusieurs revêtements de sol ont été préparés par application de PSA sur un revêtement en PVC se présentant sous la forme d'un rouleau ou de lames.

Ces revêtements ont subi des tests de cisaillement, de tack et de vieillissement selon les protocoles détaillés ci-après.

### 1/ Protocoles des tests de cisaillement, de tack et de vieillissement

Sauf indication contraire, ces tests sont réalisés dans les conditions normales de température et de pression, c'est-à-dire à 23°C et à 1 atm (1 atm = 101 325 Pa) et à 50% d'humidité relative.

### a/ Test de cisaillement

Ce test est similaire à un test de cohésion. Le cisaillement correspond à la sollicitation mécanique de la colle alors que la cohésion est une propriété de la colle.

Le test de cisaillement permet d'évaluer si la colle (ou l'adhésif) a une bonne cohésion et donc de mesurer le pouvoir cohésif d'un revêtement enduit de cette colle.

Protocole du test de cisaillement :
On mesure la force de cisaillement nécessaire pour séparer deux surfaces planes en contact, dont l'une présente un caractère adhésif (poissant, ou « tack »).

Pour cela, l'appareillage suivant a été utilisé :
- machine d'essai de traction par exemple de type LLOYD, instrument référencé LR5K,
- support (métal ou bois ou fibre-ciment ou revêtement de sol PVC). Par exemple, 2 plaques de 5 x 15 cm chacune,
- rouleau à maroufler de 5 kg.

Échantillonnage :
On prélève une bande de 20 x 5 cm, et une bande de 10 x 5 cm dans le revêtement à tester (la bande de 10 x 5 cm sert à caler l'éprouvette dans les mors de la machine d'essai de traction).

Mode opératoire :
- on dispose les deux plaques de support (par exemple en fibre-ciment) sur une surface plane, alignées dans le sens de la longueur et bout à bout (figure 1). Le cas échéant, la surface la plus fibreuse du support est sur le dessus, de sorte que le revêtement à tester soit collé de ce côté,
- on place par-dessus les deux bandes de revêtement à tester, alignées dans le sens de la longueur et bout à bout (figure 1). La surface d'adhésion soumise au cisaillement mesure ainsi 5 x 5 cm,
- on réalise 5 allers retours dans le sens de la longueur avec un rouleau à maroufler de 5kg sans ajouter de pression supplémentaire,
- l'éprouvette ainsi obtenue est placée dans les mors de la machine d'essai de traction,
- une vitesse de traction de 30mm/min est commandée,
- la force maximale ainsi que l'allongement correspondant à ce maximum sont notées. Cinq mesures sont effectuées au minimum. Les résultats sont exprimés en DaN, à 0,1 DaN près.

La figure 1 illustre une vue en coupe de l'éprouvette (1) à tester, des plaques (2) de support (par exemple fibre-ciment), de la surface collée (3) soumise au cisaillement et de la cale (4).

### b/ Test de pégosité (tack)

Ce test correspond à un test d'adhérence immédiate de la colle. Il est effectué à l'aide d'un dynamomètre de traction, par exemple de la marque Dynatest (France) modèle DTEpico 100 dc. La touche du dynamomètre est mise en contact avec la surface encollée puis immédiatement remontée afin d'apprécier le tack de la colle.

### c/ Test de vieillissement (avec ou sans poids)

Les vieillissements sont réalisés dans une étuve ou enceinte climatique (pour réguler l'humidité).

Un test de tack et/ou de cisaillement peut être réalisé après vieillissement pour évaluer comment se comporte la colle. Ce test permet d'étudier la résistance à l'humidité et la température et la fonction de repositionnement.

Pour le vieillissement avec un poids, l'échantillon de revêtement de sol avec le PSA en face envers est placé dans une étuve pendant quatre semaines, collé sur un support PVC non verni et sur fibre-ciment. On vient ensuite observer s'il y a eu un transfert de colle sur le support.

### 2/ Exemples

Les tests ont été réalisés à partir de trois adhésifs :
- PSA en phase aqueuse : copolymère acrylate/acrylonitrile (PSA1),
- PSA en phase aqueuse : terpolymère vinyl acétate/éthylène/acrylate (PSA2),
- hot melt PSA à base de caoutchouc EVA.

### a/ Exemple 1

L'envers de lames en PVC (composées de PVC, de plastifiants et de charges) est enduit par enduction directe avec une colle PSA en phase aqueuse, à hauteur de 35g/m². La colle PSA est ensuite séchée.

Les tableaux 1 à 3 récapitulent les propriétés de ces exemples selon l'invention (PSA1 et PSA2) et selon l'art antérieur (hot melt PSA) en fonction des conditions de vieillissement.

Les exemples PSA1 et PSA2 montrent un aspect inchangé même après quatre semaines de vieillissement sur un support en PVC (tableau 1). Le tack reste également satisfaisant.

**Tableau 1 : Vieillissement/ résistance aux plastifiants**

| | | **Lames PVC** | | |
|---|---|---|---|---|
| | | **Hot Melt PSA** | **PSA1** | **PSA2** |
| Vieillissement 4 semaines à 50°C | tack | faible | fort | fort |
| | aspect de l'adhésif | formation de "boulettes" | inchangé | inchangé |
| | transfert de la colle sur support PVC | par endroit | aucun | aucun |
| | aspect du support PVC | brillant et gras | inchangé | inchangé |

Tests sur la variabilité du tack suivant la quantité de colle déposée :

**Tableau 2 : Tests sur la variabilité du tack suivant la quantité de colle déposée**

| | **Lames PVC** | | | |
|---|---|---|---|---|
| | Grammage | **PSA1 (N/cm²)** | **PSA2 (N/cm²)** | **Hot Melt PSA (N/cm²)** |
| Tack initial sur inox | 20g/m² | 6-10 | 9-12 | 6-15 |
| | 40g/m² | 9-12 | 10-14 | |
| | 60g/m² | 11-14 | 12-15 | |
| Tack initial sur PVC souple non verni | 20g/m² | 15-18 | 18-21 | 5-12 |
| | 40g/m² | 17-19 | 19-21 | |
| | 60g/m² | 17-21 | 22 | |

Selon le tableau 2, les propriétés restent satisfaisantes sur toute la plage observée, et ce même après vieillissement. Résultats comparatifs :

**Tableau 3 : Récapitulatif des exemples**

| | **Lames PVC** | | |
|---|---|---|---|
| | **Hot melt PSA** | **PSA1** | **PSA2** |
| **Tack initial (N/cm²)** | | | |
| métal | 9,5 | 10 | 12 |
| bois | 11 | 16 | 20 |
| fibre-ciment | 16,5 | 17 | 19 |
| PVC | 6 | 16 | 20 |

| **Tack après vieillissement à 70°C pendant une semaine (N/cm²)** | | | |
|---|---|---|---|
| métal | 3 | 6 | 8 |
| bois | 5 | 22 | 26 |
| fibre-ciment | 11 | 53 | 57 |
| PVC | 5 | 20 | 25 |

| **Cisaillement initial (N/cm²)** | | | |
|---|---|---|---|
| métal | 100 | 100 | 100 |
| bois | 80 | 100 | 100 |
| fibre-ciment | 80 | 99 | 99 |
| PVC | 100 | 99 | 98 |

| **Cisaillement après vieillissement à 70°C pendant une semaine (N/cm²)** | | | |
|---|---|---|---|
| métal | 100 | 100 | 100 |
| bois | 80 | 100 | 85 |
| fibre-ciment | 80 | 100 | 83 |
| PVC | 70 | 100 | 100 |

| **Observation visuelle après vieillissement pendant 4 semaines à 50°C sous un poids de 5kg** | | | |
|---|---|---|---|
| PVC non verni | aspect mielleux et transfert de la colle | Rien à signaler | Rien à signaler |

Comme le montrent les résultats du tableau 3, pour l'invention (PSA1 et PSA2), le tack mesuré reste satisfaisant après vieillissement. Les valeurs présentées sont des valeurs moyennes mesurées. D'autre part, les valeurs mesurées restent satisfaisantes après quatre repositionnements.

La résistance au cisaillement est également satisfaisante sur tous les supports, même après vieillissement, ce qui n'est pas le cas de l'art antérieur (hot melt PSA) dont la résistance au cisaillement est inférieure à 80 N/cm² sur un sol en bois ou en fibre-ciment.

Le vieillissement après quatre semaines à 50°C sous un poids de 5kg est supérieur à celui de l'art antérieur (hot melt PSA) car l'aspect du PSA1 et PSA2 est inchangé. La colle selon l'art antérieur, présente un aspect mielleux et un transfert de colle est observé.

### b/ Exemple 2

L'envers d'un revêtement de sol sous la forme d'un rouleau (référence Taralay Impression Compact de chez GERFLOR) est enduit de PSA1 ou PSA2 selon l'invention. Ce revêtement de sol comprend successivement les couches suivantes :
- une couche d'envers compacte à base de PVC plastifié
- un voile de verre
- un film imprimé
- une couche d'usure transparente à base de PVC plastifié

Deux types de dépôt ont été testés et validés avec ce type de revêtement :
Procédé 1, en deux temps : - enduction du PSA en phase aqueuse et séchage (par exemple 60g/m² de PSA après séchage) sur un papier anti-adhésif (film release en anglais) en polypropylène de 60µm d'épaisseur,
- lamination du papier anti-adhésif enduit sur l'envers du rouleau Procédé 2 :
   - dépôt du PSA en phase aqueuse sur la face envers du revêtement,
   - séchage, et
   - lamination du film antiadhésif en ligne sur la face envers du revêtement

Les tableaux 4 à 6 récapitulent les propriétés de ces exemples selon l'invention (PSA1 et PSA2) en fonction des conditions de vieillissement.

**Tableau 4 : Valeurs de cisaillement en fonction de la quantité déposée**

| | Valeur de cisaillement initial sur support PVC | |
|---|---|---|
| PSA1 | 100g/m² | 12-15 N/cm² |
| | 60g/m² | 10-13 N/cm² |
| | 30g/m² | 5-6 N/cm² |
| PSA2 | 120g/m² | 6-7 N/cm² |
| | 80g/m² | 4-6 N/cm² |
| | 40g/m² | 4-6 N/cm² |
| | 30g/m² | 2-3 N/cm² |

Le tableau 4 montre que l'augmentation des valeurs de cisaillement est fonction de la quantité déposée.

Les résultats présentés dans les tableaux 5 et 6 sont obtenus après application de 60g/m² de PSA1 ou PSA2 en envers d'un revêtement de sol sous la forme d'un rouleau tel que présenté selon le procédé 1.

**Tableau 5 : Vieillissement et résistance aux plastifiants**

| | | **PSA1** | **PSA2** |
|---|---|---|---|
| Vieillissement quatre semaines à 50°C | aspect de l'adhésif | inchangé | inchangé |
| | transfert de la colle sur support PVC | Rupture adhésive, pas de transfert | Rupture Adhésive |
| | aspect du support PVC | inchangé | poissant |
| test de la chaise à roulette : 25000 cycles sur support PVC après deux semaines à 50°C sur support PVC plastifié | aspect de l'adhésif | inchangé | inchangé |
| | transfert de la colle sur support PVC | rupture adhésive Pas de transfert | Rupture Adhésive apparition de fils, léger poissant |
| | aspect du support PVC | inchangé | poissant |

Les exemples selon le tableau 5 et pour le PSA1 et PSA2 montrent un aspect inchangé même après quatre semaines de vieillissement sur un support en PVC plastifié malgré un léger aspect poissant sur le PSA2.

Les résultats du tableau 5 montrent également l'absence de transfert du PSA1 sur le support en PVC même après application d'une charge de 5 kg.

**Tableau 6 : Valeurs de cisaillement comparatives**

| **Pose sur la surface d'un revêtement PVC plastifié** | PSA1 | PSA2 |
|---|---|---|
| | 60g/m² | 80g/m² |
| Valeurs de cisaillement initial | 10-13 N/cm² | 4-6 N/cm² |
| Valeurs de cisaillement après 7 jours à 70°C | 11-16 N/cm² | 12-13 N/cm² |
| valeurs de cisaillement 15 jours à 50°C | 11 - 15 N/cm² | 13-14 N/cm² |
| Valeurs de cisaillement à 10°C | 3-5 N/cm² | 5 N/cm² |
| Valeurs de cisaillement après 24 en humidité | 6-7 N/cm² | / |

Comme le montrent les résultats du tableau 6, pour l'invention (PSA1 et PSA2), le cisaillement mesuré reste satisfaisant après vieillissement. Les valeurs présentées sont les plages des valeurs moyennes mesurées.

## Revendications

1. Revêtement de sol repositionnable comprenant une face envers et une face endroit, la face envers étant destinée à être au regard du sol,
la face envers, à base de PVC, étant recouverte d'un adhésif sensible à la pression (PSA),
le PSA étant déposé à partir d'une colle PSA en phase aqueuse, le PSA étant un copolymère acrylate/acrylonitrile ou acrylate/vinyl acétate/éthylène.
la colle PSA étant une composition liquide comprenant au moins un PSA et de l'eau,
le revêtement de sol présentant une valeur de pégosité comprise entre 1 et 50 N/cm² (mesurée selon la méthode de la description).

2. Revêtement de sol selon la revendication 1, ***caractérisé* en ce qu'**il présente une valeur de pégosité comprise entre 1 et 25 N/cm² (mesurée selon la méthode de la description).

3. Revêtement de sol selon la revendication 1 ou 2, ***caractérisé* en ce qu'**il présente une valeur de résistance au cisaillement comprise entre 1 et 40 N/cm², avantageusement entre 5 et 20 N/cm² (mesurée selon la méthode de la description).

4. Revêtement de sol selon l'une des revendications 1 à 3, ***caractérisé* en ce qu'**il comprend une quantité de PSA comprise entre 15 et 100 g/m², avantageusement entre 15 et 50 g/m².

5. Revêtement de sol selon l'une des revendications 1 à 4 ***caractérisé* en ce que** la face envers est constituée d'une couche non fibreuse.

6. Revêtement de sol selon l'une des revendications 1 à 5 ***caractérisé* en ce que** la colle PSA en phase aqueuse est déposée sur la couche envers, puis séchée, le PSA étant ensuite recouvert d'un film antiadhésif.

7. Revêtement de sol selon l'une des revendications 1 à 6, ***caractérisé* en ce que** la colle PSA en phase aqueuse est déposée sur un film antiadhésif, puis séchée, le PSA étant ensuite laminé sur la face envers du revêtement de sol.

8. Revêtement de sol selon l'une des revendications 1 à 7 ***caractérisé* en ce que** le PSA forme une couche barrière au(x) plastifiant(s) de la couche envers.

9. Revêtement de sol selon l'une des revendications 1 à 8, ***caractérisé* en ce qu'**il présente une épaisseur comprise entre 2 et 10 mm, avantageusement entre 2 et 7 mm.

10. Procédé de rénovation d'un sol recouvert d'un support en plastique, selon lequel on positionne le revêtement de sol selon l'une des revendications 1 à 9 sur un support en plastique à rénover, et on forme une couche barrière aux plastifiants du support en plastique à rénover, avec le PSA recouvrant la face envers du revêtement de sol.

11. Utilisation du revêtement de sol selon l'une des revendications 1 à 9 pour former une couche barrière aux plastifiants d'un support en plastique à rénover.

## Patentansprüche

1. Wiederverlegbarer Bodenbelag mit einer Rückseite und einer Vorderseite, die Rückseite ist dazu bestimmt, auf dem Boden aufzuliegen,
die Rückseite, auf PVC-Basis ist dabei mit einem druckempfindlichen Kleber (PSA) beschichtet, der PSA wird mittels eines PSA-Klebers in wässriger Phase aufgebracht, bei dem PSA handelt es sich um ein Acrylat/ Acrylnitril oder Acrylat/ Vinyl- Acetat /Ethylen- Copolymer,
beim PSA- Kleber handelt es sich um eine flüssige Zusammensetzung mit mindestens einem PSA und Wasser,
der Bodenbelag weist dabei einen Haftfähigkeitswert zwischen 1 und 50 N/cm² auf (gemessen nach dem Verfahren der Beschreibung).

2. Bodenbelag nach Anspruch 1, ***dadurch gekennzeichnet, dass*** er einen Haftfähigkeitswert zwischen 1 und 25 N/cm² aufweist (gemessen nach dem Verfahren der Beschreibung).

3. Bodenbelag nach Anspruch 1 oder 2, ***dadurch gekennzeichnet, dass*** er einen Scherfestigkeitswert zwischen 1 und 40 N/cm² aufweist, vorteilhafterweise zwischen 5 und 20 N/cm² (gemessen nach dem Verfahren der Beschreibung).

4. Bodenbelag nach einem der Ansprüche 1 bis 3, ***dadurch gekennzeichnet, dass*** er eine PSA- Menge zwischen 15 und 100 g/m² enthält, vorteilhafterweise zwischen 15 und 50 g/m².

5. Bodenbelag nach einem der Ansprüche 1 bis 4, ***dadurch gekennzeichnet, dass*** die Rückseite aus einer nicht faserhaltigen Schicht besteht

6. Bodenbelag nach einem der Ansprüche 1 bis 5, ***dadurch gekennzeichnet, dass*** der PSA- Kleber in wässriger Phase auf die Rückseite aufgetragen, dann getrocknet wird, das PSA wird dann mit einem Antihaft-Film beschichtet.

7. Bodenbelag nach einem der Ansprüche 1 bis 6, ***dadurch gekennzeichnet, dass*** der PSA-Kleber in der wässrigen Phase, aufgetragen, dann getrocknet wird, der PSA wird dann auf die Rückseite des Bodenbelags laminiert.

8. Bodenbelag nach einem der Ansprüche 1 bis 7, ***dadurch gekennzeichnet, dass*** der PSA eine Sperrschicht gegenüber dem(den) Weichmacher(n) der Rückseite bildet.

9. Bodenbelag nach einem der Ansprüche 1 bis 8, ***dadurch gekennzeichnet, dass*** er eine Dicke zwischen 2 und 10 mm hat, vorteilhafterweise zwischen, 2 und 7 mm

10. Verfahren zur Erneuerung eines Bodens, der mit einer Kunststoffschicht bedeckt ist, demzufolge der Bodenbelag nach einem der Ansprüche 1 bis 9 auf eine zu erneuernde Kunststoffschicht gelegt wird und
eine Sperrschicht gegenüber Weichmachern des Trägers des zu erneuernden Kunststoffs mit dem PSA, das die Rückseite des Bodenbelags bedeckt, gebildet wird.

11. Einsatz des Bodenbelags nach einem der Ansprüche 1 bis 9 zur Bildung einer Sperrschicht gegenüber Weichmachern des Trägers des zu erneuernden Kunststoffs.

## Claims

1. A repositionable floor covering comprising a back side and a front side, the back side being intended to face the floor,
the back side, made from PVC, being coated with a pressure-sensitive adhesive (PSA),
the PSA being deposited from an aqueous phase PSA adhesive, the PSA is an acrylate/acrylonitrile or acrylate/vinyl acetate/ethylene copolymer
the PSA adhesive being a liquid composition comprising at least one PSA and water,
the floor covering having a tack value of between 1 and 50 N/cm² (measured according to the method of the specification).

2. Floor covering according to claim 1, **characterized in that** it has a tack value between 1 and 25 N/cm² (measured according to the method of the specification).

3. Floor covering according to claim 1 or 2, **characterized in that** it has a shear strength value between 1 and 40 N/cm², advantageously between 5 and 20 N/cm² (measured according to the method of the specification).

4. Floor covering according to any of claims 1 to 3, **characterized in that** it comprises an amount of PSA between 15 and 100 g/m², advantageously between 15 and 50 g/m².

5. Floor covering according to any of claims 1 to 4, **characterized in that** the back side consists of a non-fibrous layer.

6. Floor covering according to one of claims 1 to 5, **characterized in that** the aqueous phase PSA adhesive is applied to the back side and then dried, the PSA then being covered with a non-stick film.

7. Floor covering according to any one of claims 1 to 6, **characterized in that** the aqueous phase PSA adhesive is applied to a non-stick film and then dried, the PSA then being laminated to the backside of the floor covering.

8. Floor covering according to any of claims 1 to 7, **characterized in that** the PSA forms a barrier layer to the plasticizer(s) of the backing layer.

9. Floor covering according to any of claims 1 to 8, **characterized in that** it has a thickness between 2 and 10 mm, advantageously between 2 and 7 mm.

10. Method for renovating a floor covered with a plastic support, according to which the floor covering according to one of claims 1 to 9 is positioned on a plastic support to be renovated, and
a plasticiser-barrier layer is formed on the plastic support to be renovated, with the PSA covering the back side of the floor covering.

11. Use of the floor covering of any of claims 1 to 9 to form a plasticizer barrier layer of a plastic support to be renovated.
